(19) Europäisches Patentamt
European Patent Office
Office européen des brevets

(11) Publication number: **0 310 735 A1**

(12) # EUROPEAN PATENT APPLICATION

(21) Application number: 88100200.0

(22) Date of filing: 08.01.88

(51) Int. Cl.[4]: C08G 65/40 , C08G 65/48 , C08J 5/24 , C07D 207/44 , C08G 73/12

(43) Date of publication of application: 12.04.89 Bulletin 89/15

(84) Designated Contracting States: CH DE ES FR GB IT LI SE

(71) Applicant: THE BOEING COMPANY
P.O. Box 3999, M.S. 85-74
Seattle Washington 98124(US)

(72) Inventor: Lubowitz,Hyman R.
26 Coral Tree Lane
Rolling Hills Estates California(US)
Inventor: Sheppard,Clyde H.
12806 S.E. 45th Place
Bellevue,Washington 98006(US)

(74) Representative: Baillie, Iain Cameron et al
c/o Ladas & Parry Isartorplatz 5
D-8000 München 2(DE)

(54) **Polysulfone and polyethersulfone oligomers.**

(57) Polysulfone and polyethersulfone oligomers made by the condensation of phenols and halogenated moieties exhibit improved solvent resistance when capped with crosslinkable end cap imidophenols. Composites made with a blend of the oligomers and corresponding polymers formed from the phenols and halogenated moieties, but without end caps, exhibit superior impact resistance while retaining the desired solvent resistance.

EP 0 310 735 A1

# POLYSULFONE AND POLYETHERSULFONE OLIGOMERS

## Technical Field and Background of the Invention

The present invention relates to polysulfone and polyethersulfone oligomers formed by the condensation of phenols and halogenated aromatic compounds.

United States Patent 4,476,184, incorporated by reference, discloses thermoplastic polysulfone oligomers having dimethyloxynadic (DONA) crosslinkable end caps to impart solvent-resistance to the cured resins. Similar oligomers having disclosed in United States Patent 4,536,559, which also is incorporated by reference.

## Summary of the Invention

Polysulfone and polyethersulfone oligomers are prepared by the condensation of phenols and halogenated aromatic compounds. Solvent resistance is obtained in the cured resins by terminating the polymer chains with crosslinkable imidophenol end caps (E-OH) selected from the group consisting of:

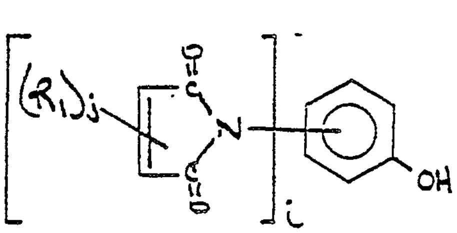

,

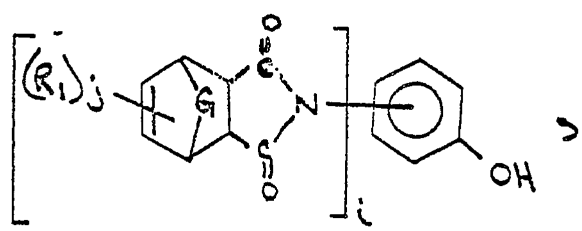

,

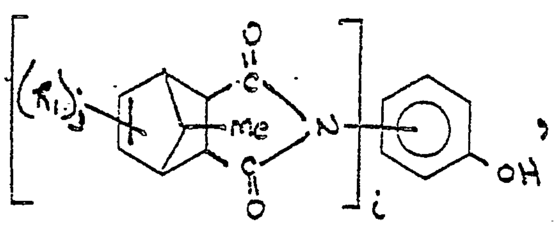

,

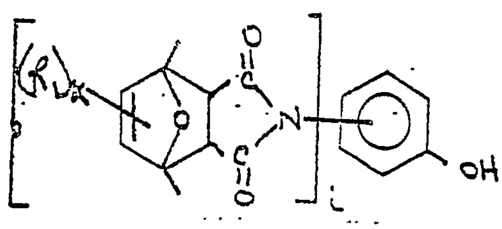

, OR

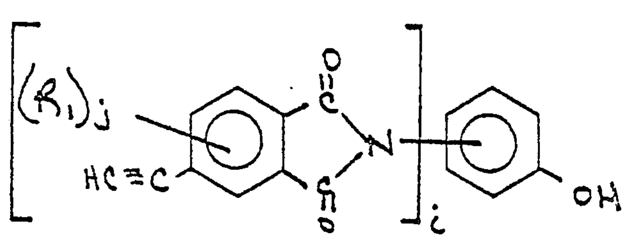

wherein $R_1$ = lower alkyl, lower alkoxy, aryl, aryloxy, substituted aryl, halogen, or mixture thereof;
j = 0, 1, or 2;
i = 1 or 2;
G = $-CH_2-$, -O-, -S-, or $-SO_2-$; and
k = 1 or 2.

The preferred solvent-resistant by polysulfone and polyethersulfone are prepared by condensing the end caps with a mixture of aromatic difunctional phenols (diols) and difunctional halogenated aromatic moieties (dihalogens), according to the reaction scheme:

2 moles of the end cap;
n + 1 moles of the dihalogen; and
n moles of the diol.

The dihalogen is preferably selected from the group consisting of:

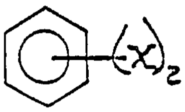 , 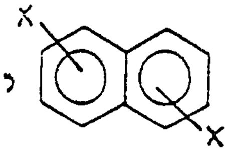 , 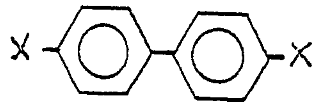 , 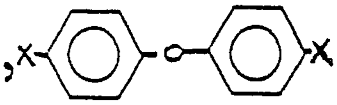

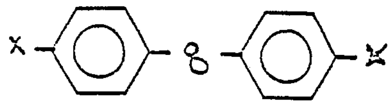 ,

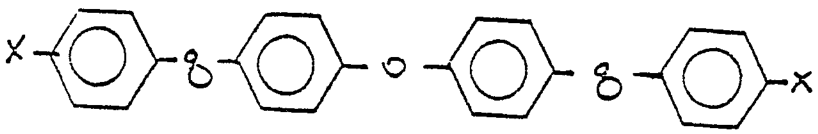 ,

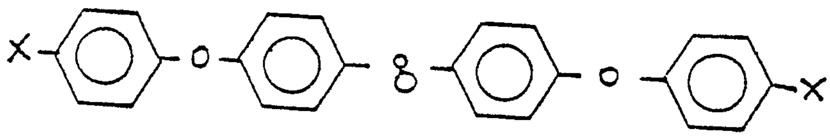 , or

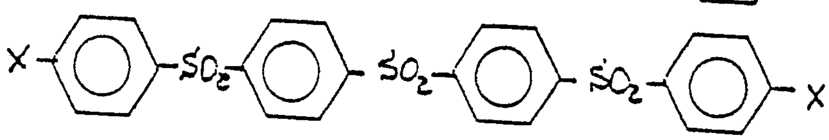

wherein X = halogen, preferably chlorine; and
g = -S-, $-SO_2-$, -CO-, $-(CH_3)_2C-$, and $-(CF_3)_2C-$, and preferably either $-SO_2-$ or -CO-.

The diols are preferably selected from the group consisting of:
hydroquinone;
bisphenol A;
P, P′ - biphenol;
4, 4′ - dihydroxydiphenylsulfide;
4, 4′ - dihydroxydiphenylether;
4, 4′ - dihydroxydiphenylisopropane;
4, 4′ - dihydroxydiphenylhexafluoropropane;
HO - Ar - OH;
HO - Ar - L - Ar′ - L - Ar - OH; and
HO - Ar′ - L - Ar - L - Ar′ - OH;
wherein L = $-CH_2-$, $-(CH_3)_2C-$, $-(CF_3)_2C-$, -O-, -S-, $-SO_2-$;
or -CO-;

Ar′= 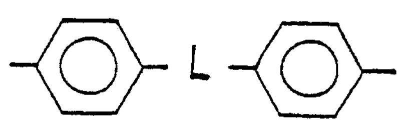

Ar = 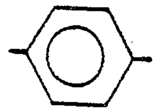 ; 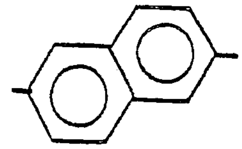 ;

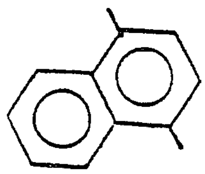 ; 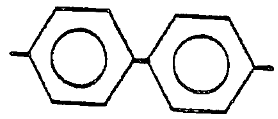 ; or

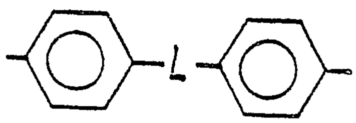

Ar and Ar′ may include substituents on the aromatic groups, the substituents being selected from the group consisting of lower alkyl, lower alkoxy, aryl, aryloxy, substituted aryl, halogen, or mixtures thereof.

Conductive or semiconductive cured resins can be made by including conductive linkages (Schiff bases, oxazole, thiazole, or imidazole, linkages, for example) in the backbone. In these circumstances suitable diols include compounds represented by Schiff bases, such as:

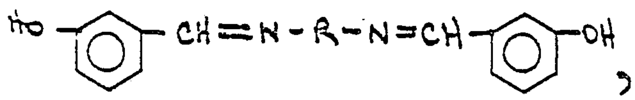 ,

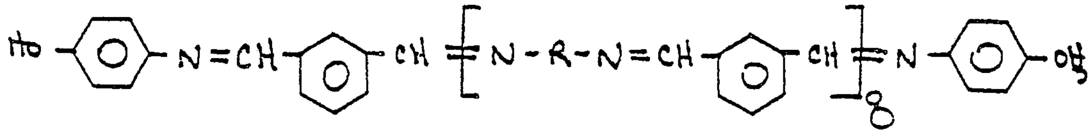 , OR

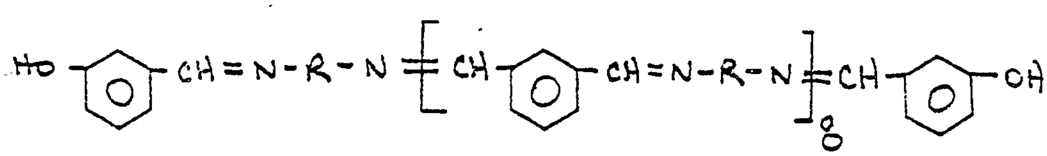

wherein R is selected from the group consisting of:
phenyl;
biphenyl;
naphthyl; or
a compound of the general formula:

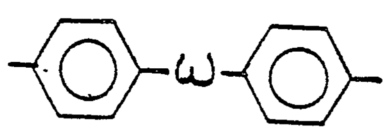

wherein W = $-CH_2-$ or $-SO_2-$; and
g = a small integer, preferably 5 or less, and, more preferably, 0 or 1.

The conductive or semiconductive resins and composites are prepared by including a suitable dopant within the cured composite. The dopant is added to the oligomer prior to curing.

Preferred capped oligomers have formula weights between about 1,000 and 40,000; preferably between about 5,000 and 30,000; and more preferably, between about 10,000 and 20,000. An oligomer with a

molecular weight lower than about 1,000 will probably have excessive crosslinking, will lose its thermoplastic properties and, will consequently, have the disadvantages associated with thermosetting resins. If the oligomer has a molecular weight of more than about 40,000, insufficient crosslinking probably will occur and the resulting resin will have inadequate solvent resistance, as with prior thermoplastic resins. Within about 1,000 to 40,000, the crosslinked compounds have beneficial properties of both thermoplastic and thermosetting resins without the disadvantages of either.

Impact resistance of the cured composites formed from prepregs of the oligomers can be increased without deleterious loss of solvent resistance by forming the prepregs with a blend of capped oligomers to provide crosslinking upon curing and uncapped polymers of the corresponding backbone to provide compatibility of the oligomer and polymer. A 50-50 blend of oligomer and on a molar basis polymer for example, can be formed by dissolving the capped oligomer in a suitable first solvent, dissolving the uncapped polymer in an aliquot of the first solvent or in a solvent miscible with the first solvent, mixing the two solvent solutions to form a lacquer, and applying the lacquer to fabric in a conventional prepregging process.

Composites of the oligomers and of the oligomer-polymer blends are prepared by curing the prepregs or resins in conventional vacuum bagging techniques.

## Detailed Description of the Invention

Polysulfone and polyethersulfone oligomers are prepared by the condensation reaction of:

2 moles of a crosslinkable end cap imidophenol (E-OH);

n + 1 moles of a difunctional halogenated aromatic moiety (dihalogen); and

n moles of a difunctional phenol (diol), by mixing the reactants under an inert atmosphere, and heating the mixture, if necessary, to induce the reaction. Best results are achieved by mixing the phenol and diol (with or without a suitable solvent) to form a premix, and adding the premix to the dihalogen (dissolved in a compatible solvent, if necessary or desirable). The product has the general formula:

$E{-}O{+}(\text{dihalogen}){-}O{-}(\text{diol}){-}O{+}_n(\text{dihalogen}){-}O{-}E$

Undesirable side reactions can be inhibited by including a base in the reaction mixture, generally selected from the group consisting of sodium or potassium or sodium or potassium hydroxide. The base buffers the reaction mixture by reacting with hydrogen ions evolved during the condensation. An excess of base (at least about 10% more than the theoretical molar quantity) should be used.

The end cap phenol (E-OH) preferably is selected from the group consisting of:

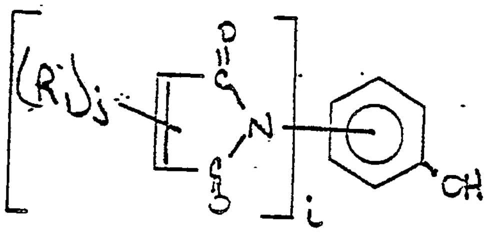

,

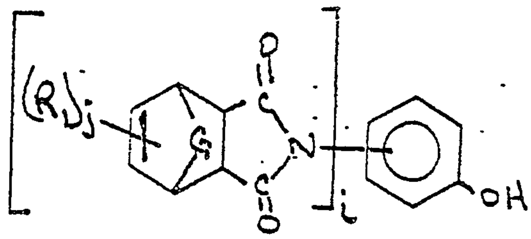

,

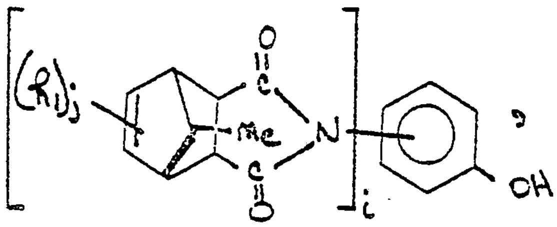

,

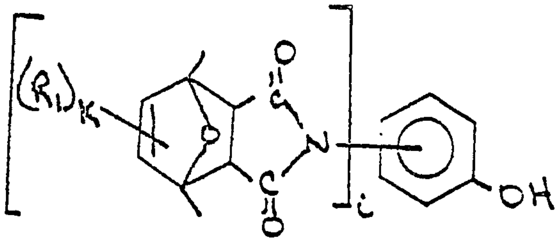

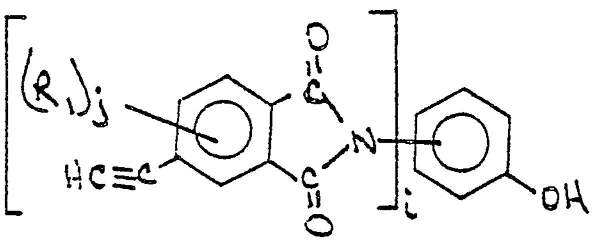

wherein $R_1$ = lower alkyl, lower alkoxy, aryl, aryloxy, substituted aryl, halogen, or mixture thereof;
j = 0, 1 or 2;
i = 1 or 2;
G = $-CH_2-$, -O-, -S- or $-SO_2-$; and
k = 1 or 2.

To obtain the highest thermal stability, the preferred end caps are:

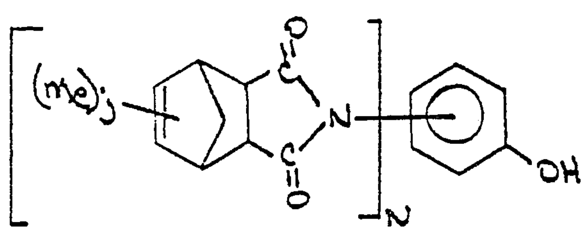

or

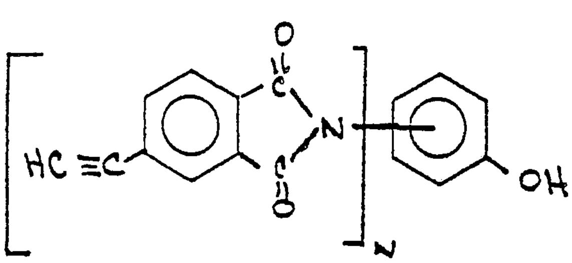

wherein n = 1 or 2 (preferably 2); and
j = 0, 1, or 2.

The diol is preferably selected from the group consisting of:
hydroquinone;
bisphenol A;
p, p′ - biphenol;
4, 4′ - dihydroxodiphenylsulfide;
4, 4′ - dihydroxydiphenylether;
4, 4′ - dihydroxydiphenylisopropane;
4, 4′ - dihydroxydiphenylhexafluoropropane;
HO - Ar - OH;
HO - Ar - L - Ar′ - L - Ar - OH ; and
HO - Ar′ - L - Ar - Ar - OH;
wherein L = $-CH_2-$, $-(CH_3)_2C-$, $-(CF_3)_2C-$, -O-, -S-,
$-SO_2-$,
or -CO-;

Ar′ = 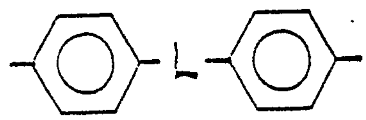

Ar = 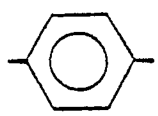 , 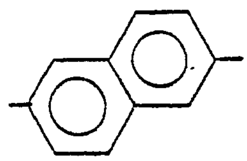 , 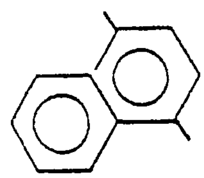 ,

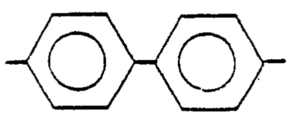 , or 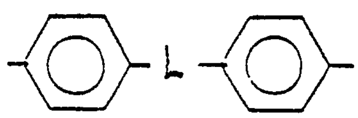 .

Ar and Ar′ may include substituents selected from the group consisting of lower alkyl, lower alkoxy, aryl, aryloxy, substituted aryl, or mixtures thereof. Unsubstituted compounds are preferred to avoid steric hindrance, and for cost, convenience, and performance. Although the para isomer is illustrated, other isomers may be used.

To make semiconductive or conductive composites, diols including conductive linkages might be used. These diols are illustrated by Schiff base diols having the backbones:

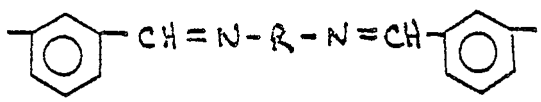

,

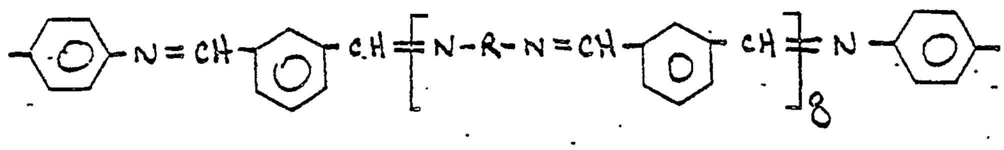

, OR

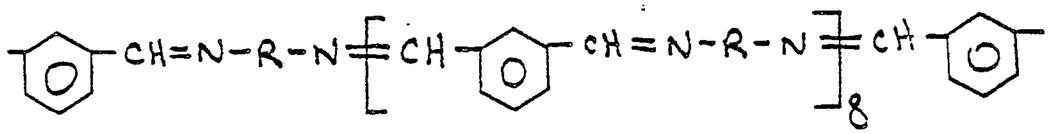

made by the condensation of amines and aldehydes, wherein R is selected from the group consisting of:
phenyl;
biphenyl;
naphthyl; or
a compound of the general formula:

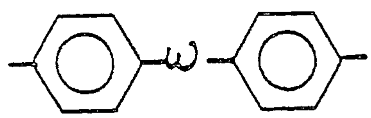

wherein W = $-CH_2-$ or $-SO_2-$; and
q = a small integer, preferably 5 or less, and more preferably, 0 or 1.

Dopants for creating semiconductive or conductive composites are preferably selected from compounds commonly used to dope other polymers, namely, (1) dispersions of alkali metals (for high activity) or (2) strong chemical oxidizers, particularly alkali perchlorates (for lower activity). Arsenic compounds and elemental halogens, while active dopants, are too dangerous for general usage, and are not recommended.

The dopants react with the polymers to form charge transfer complexes. N-type semiconductors result from doping with alkali metal dispersions. P-type semiconductors result from doping with elemental iodine or perchlorates.

While research into conductive or semiconductive polymers has been intense, the resulting compounds (mainly polyacetylenes, polyphenylenes, and polyvinylacetylenes) are unsatisfactory for aerospace applications because the polymers are:

(a) unstable in air;
(b) unstable at high temperatures;
(c) brittle after doping;
(d) toxic because of the dopants; or
(e) intractable.

These problems are overcome or significantly reduced with the conductive oligomers of the present invention.

The polymers of the present invention generally exhibit greater oxidative stability and greater dimensional stability at elevated temperatures, greater impact strengths, greater dimensional stiffness over a wider range of temperatures, and greater toughness than prior art conductive oligomers and composites.

While conventional theory holds that semiconductive polymers should have (1) low ionization potentials, (2) long conjugation lengths, and (3) planar backbones, there is an inherent trade-off between conductivity and toughness or processibility, if these constraints are followed. To overcome the processing and toughness shortcomings common with Schiff base, oxazole, imidazole, or thiazole polymers, the oligomers of the present invention, include "sulfone" linkages interspersed along the backbone providing a mechanical

swivel for the rigid, conductive segments of the arms. Phenoxyphenylsulfone or phenoxyphenylketone moieties are preferred. The resulting compounds are polyphenoxyphenylsulfoneimido polymers with conductive segments.

The conductive or semiconductive resins and composites are prepared by including a suitable dopant within the cured composite. The dopant is added to the oligomer prior to curing.

The dihalogen is preferably selected from the group consisting of:

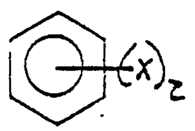
;
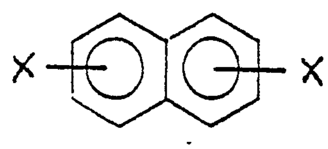
;
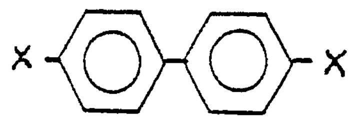
;
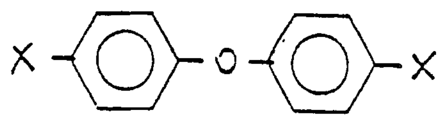
;
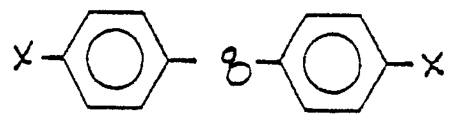
;
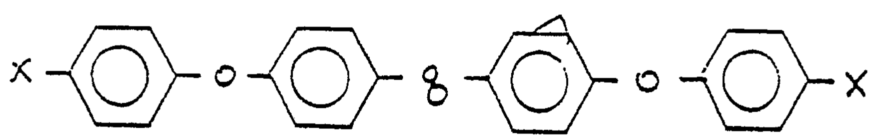
;
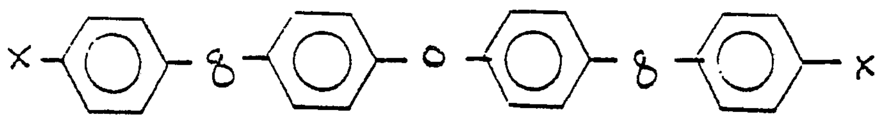
; OR
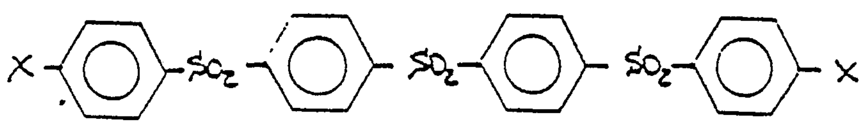

wherein X = halogen, preferably chlorine; and
q = -S-, $-SO_2-$, -CO-, $-(CH_3)_2C-$, and
$-(CF_3)_2C-$, and preferably either $-SO_2-$or -CO-.
Again, other isomers of these compounds can be used.

Oligomers of this general type have curing temperatures of about 350-600° F (usually 400-500° F), but reduced curing temperature can be achieved when the oligomers are combined with coreactants in roughly equimolar amounts. The coreactants improve the solvent resistance of the composites, but reduce the thermoplastic properties. Suitable coreactants are selected from the group consisting of:

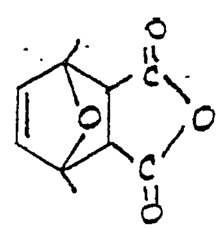

and

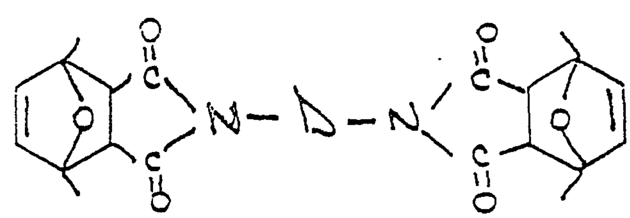

or similar compounds analogous to the oligomer imidophenol end cap,
where D is an alkyl having 2 to 6 carbon atoms or an aromatic radical such as:

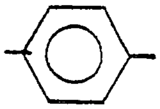 , 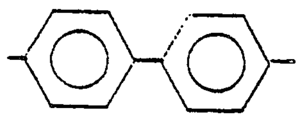 , or 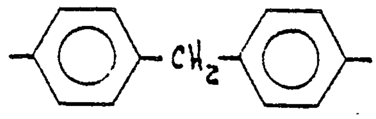

Impact resistance of the cured composites formed from prepregs of the oligomers can be increased without deleterious loss of solvent resistance by forming the prepregs with a blend of capped oligomers to provide crosslinking upon curing and uncapped polymers of the corresponding backbone to provide compatibility of the oligomer and polymer. A 50-50 blend on a molar blend of oligomer and polymer is preferably formed by dissolving the capped oligomer in a suitable first solvent, dissolving the uncapped polymer in a separate portion of the same solvent or in a solvent miscible with the first solvent, mixing the two solvent solutions to form a lacquer, and applying the lacquer to fabric in a conventional prepregging process.

Although the polymer in the blend usually has the same length backbone as the oligomer, the properties of the composite formed from the blend can be adjusted by altering the ratio of formula weights for the polymer and oligomer. Seemingly, the terminal groups of the polymer are unimportant so long as these groups do not react with or impede the crosslinking of the oligomer end caps. Also, it is probably not essential that the oligomer and polymer have identical repeating units, but that the oligomer and polymer merely be compatible in the solution prior to sweeping out as a prepreg. Of course, if the polymer and oligomer have identical backbones, compatibility in the blend is likely to occur.

The polymers are made by the condensation of diols, as described above, and dihalogens, as described above, in a solution containing an excess of base ($K_2CO_3$, $Na_2CO_3$, KOH, or NaOH).

Composites of the oligomers and of the oligomer-polymer blends are prepared by curing the prepregs or resins in conventional vacuum bagging techniques. For example, the oligomers can be applied to a fiber cloth reinforcement, and the resulting prepreg can be cured in a vacuum bag process at an elevated temperature. Dopant should be added to the oligomer prior to prepregging, if conductive or semiconductive composites are being prepared.

While preferred embodiments have been described, those skilled in the art will readily recognize alterations, variations, and modifications which might be made without departing from the inventive concept. Therefore, the claims should be interpreted liberally with the support of the full range of equivalents known to those of ordinary skill based upon this description. The examples are given to illustrate the invention and not to limit it. The claims should be limited only as is necessary in view of the pertinent prior art.

## Claims

1. A method for preparing an oligomer; by condensing
2 moles of an end cap imidophenol;
n + 1 moles of a dihalogen moiety; and
n moles of a diol,
wherein the imidophenol is selected from the group consisting of:

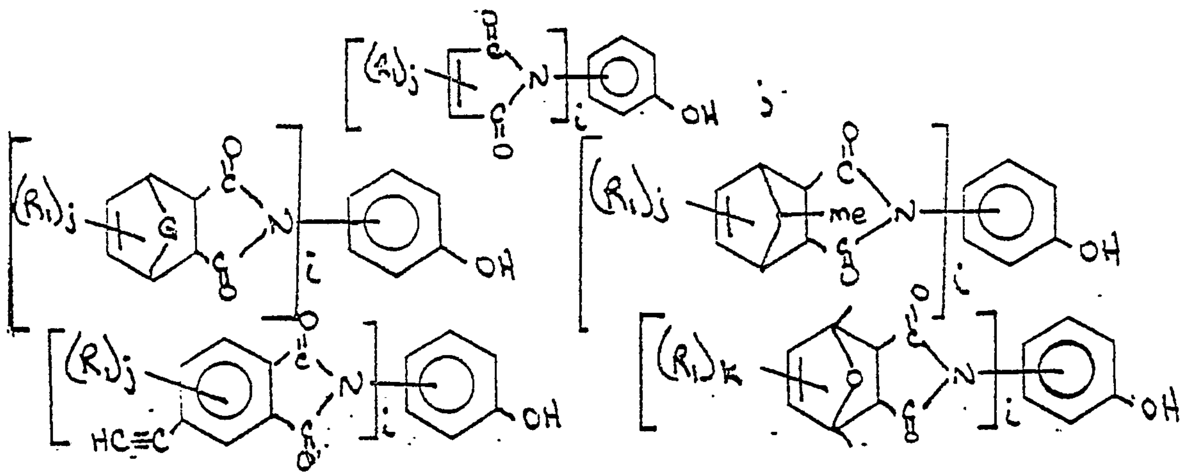

wherein $R_1$ = lower alkyl, lower alkoxy, aryl, aryloxy, substituted aryl, halogen, or mixtures thereof;
j = 0, 1, or 2;
i = 1 or 2;
G = $-CH_2-$, -O-, -S-,, or $-SO_2-$; and
k = 1 or 2;
wherein the dihalogen moiety is selected from the group consisting of:

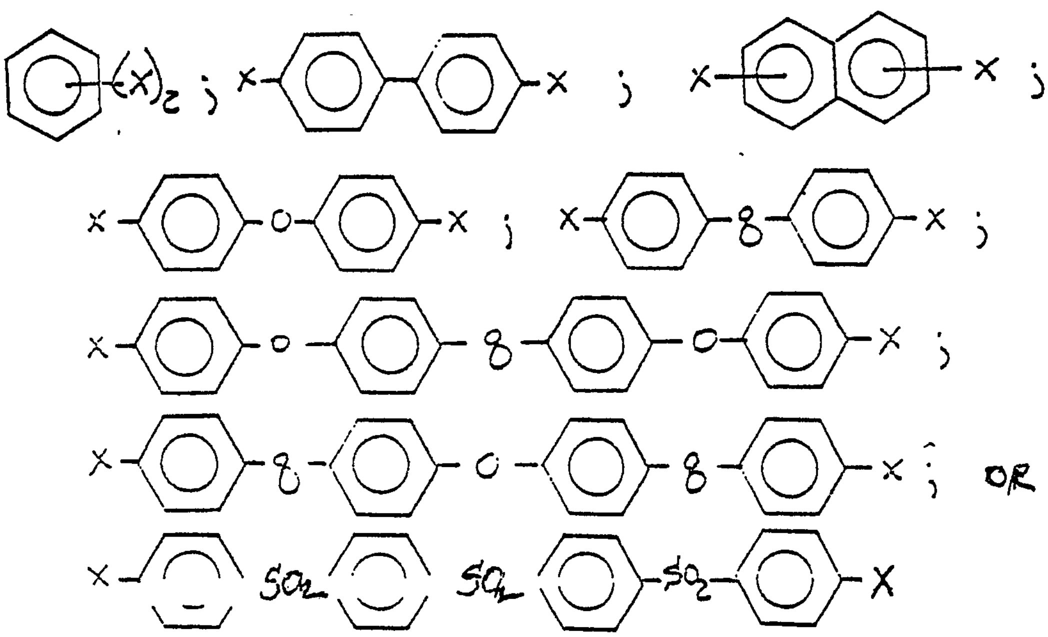

OR

wherein X = halogen; and
q = -S-, $-SO_2-$, -CO-, $-(CH_3)_2C-$, and $-(CF_3)_2C-$;
wherein the diol is selected from the group consisting of:
hydroquinone;
bisphenol A;
p, p′ - biphenol;
4, 4′ - dihydroxydiphenylsulfide;
4, 4′ - dihydroxydiphenylether;
4, 4′ - dihydroxyphenylisopropane;
4, 4′ - dihydroxydiphenylhexafluoropropane;

HO - Ar - OH;
HO - Ar - L - Ar′ - L - Ar - OH; and
HO - Ar′ - L - Ar - L - Ar′ - OH;
wherein L = $-CH_2-$, $-(CH_3)_2C-$, $-(CF_3)_2C-$, -O-, -S-, $-SO_2-$, or -CO-;

Ar′ = 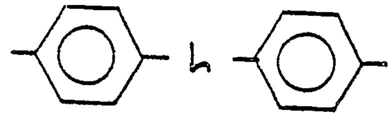

Ar = 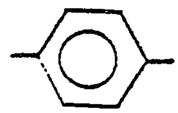 ; 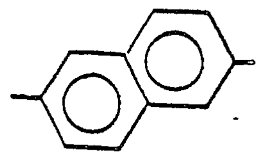 ;

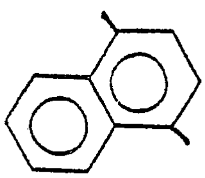 ; 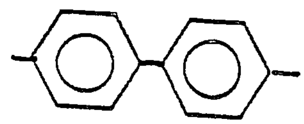 ; or

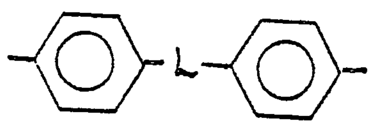

2. The product of the process of claim 1.

3. The method of claim 1 wherein the reaction occurs in the presence of an inert atmosphere at an elevated temperature and in the presence of an excess of base.

4. The method of claim 3 wherein the base is selected from the group consisting of $K_2CO_3$, $Na_2CO_3$, KOH, NaOH, or mixtures thereof.

5. A prepreg formed with the oligomer of claim 2.

6. The prepreg of claim 5 further comprising a substantially equimolar amount of a coreactant mixed with the oligomer, the coreactant improving the solvent resistance of the cured composite formed with the prepreg.

7. The prepreg of claim 5 further comprising a substantially equimolar amount of a polymer mixed with the oligomer, the polymer being compatible with the oligomer and having an analogous backbone to that of the oligomer, the polymer being formed by the condensation of about m moles of a diol in the oligomer and about m+1 moles of the dihalogen moiety, the polymer imparting higher impact resistance to the cured composite.

8. The prepreg of claim 6 further comprising a polymer mixed with the oligomer and coreactant, the polymer being compatible with the oligomer and having a backbone similar or identical to that of the oligomer, the polymer being formed by the condensation of about m moles of the diol used in the oligomer and about m+1 moles of the dihalogen moiety, the polymer imparting higher impact resistance to the cured composite.

9. A polymer, comprising the condensation product of:
m moles of a diol; and
m+1 moles of a dihalogen moiety reacted in the presence of the excess base under an inert atmosphere, wherein the dihalogen moiety is selected from the group consisting of:

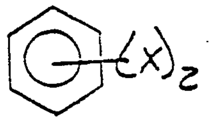 ; 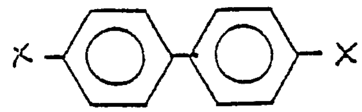 ; 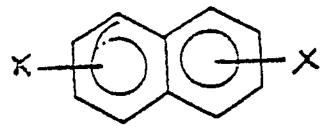 ;

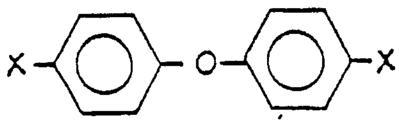 ; 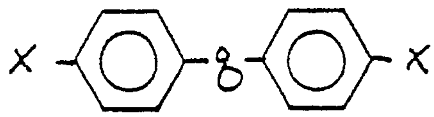 ;

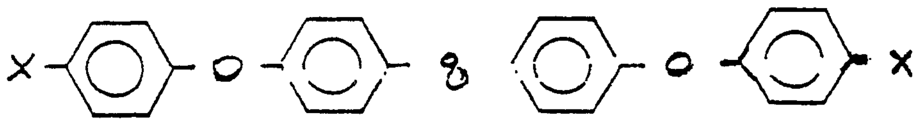 ;

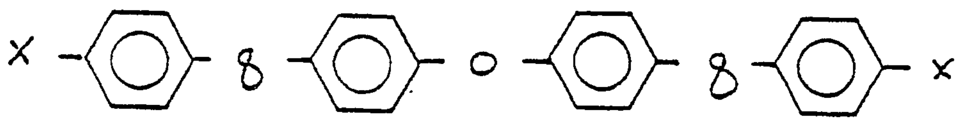 ;

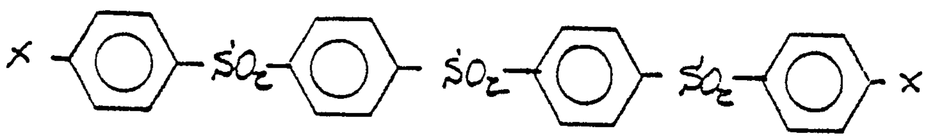

wherein X = halogen, preferably chlorine; and
q = -S-, $-SO_2-$, -CO-, $-(CH_3)_2C-$, and
$-(CF_3)_2C-$; and
wherein the diol is selected from the group consisting of:
hydroquinone;
bisphenol A;
p, p′ - bisphenol;
4, 4′ - dihydroxydiphenylsulfide;
4, 4′ - dihydroxydiphenylether;
4, 4′ - dihydroxydiphenylisopropane;
4, 4′ - dihydroxydiphenylhexafluoropropane;
HO - Ar - OH;
HO - Ar - L - Ar′ - L - Ar - OH; and
HO - Ar′ - L - Ar - L - Ar′ - OH;
wherein L = $-CH_2-$, $-(CH_3)_2C-$, $-(CF_3)_2C-$, -O-, -S-, $-SO_2-$, or -CO-;

Ar' = 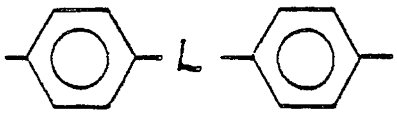

Ar = 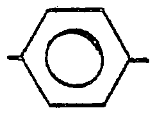 ; 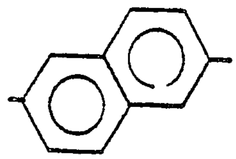 ; 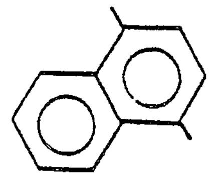 ;

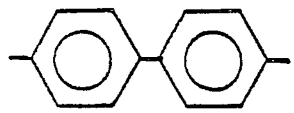 ; OR

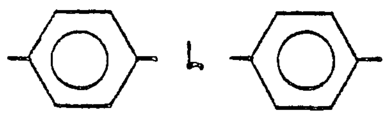

10. A method for preparing a prepreg having a blend of a crosslinkable oligomer and of a polymer compatible with the oligomer, comprising the steps of:

(a) preparing the oligomer by reacting 2 moles of an end cap imidophenol, n moles of a diol, and n+1 moles of a dihalogen moiety in the presence of excess base under an inert atmosphere;

(b) preparing the polymer by reacting m moles of the diol step (a) with m+1 moles of the dihalogen moiety of step (a) in the presence of excess base;

(c) dissolving the oligomer in a suitable first solvent;

(d) dissolving the polymer in the first solvent or in another solvent miscible in the first solvent;

(e) combining the dissolved oligomer and the dissolved polymer to form a blended lacquer; and

(f) sweeping the lacquer into a suitable fabric to form the prepreg.

11. The method of claim 10 wherein substantially equimolar amounts of the oligomer and polymer are mixed.

12. The prepreg formed by the method of claim 10.

13. A conductive or semiconductive oligomer, comprising:

(a) the product of the process of condensing:

2 moles of an end cap imidophenol;

n+1 moles of a dihalogen moiety; and

n moles of a diol,

wherein the imidophenol is selected from the group consisting of:

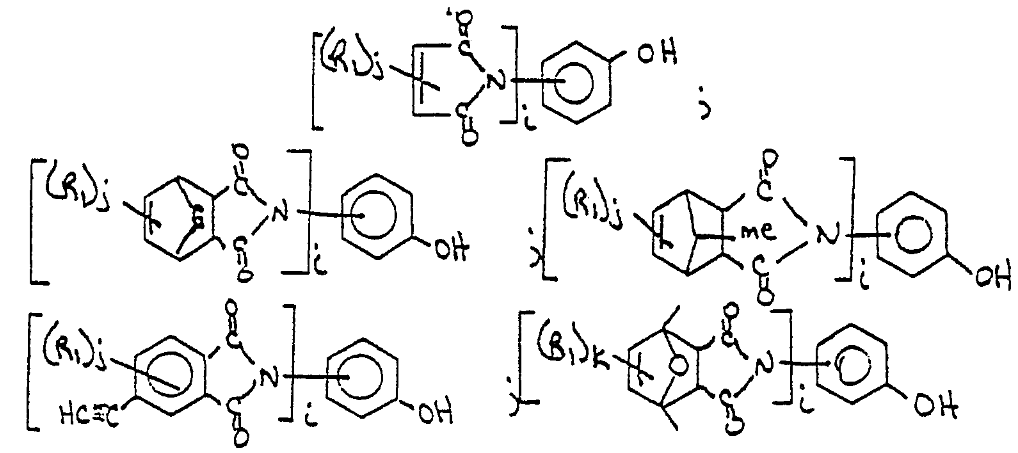

wherein $R_1$ = lower alkyl, lower alkoxy, aryl, aryloxy, substituted aryl, halogen, or mixtures thereof;
j = 0, 1, or 2;
i = 1 or 2;
G = $-CH_2-$, -O-, -S-, or $-SO_2-$; and
k = 1 or 2;
wherein the dihalogen moiety is selected from the group consisting of:

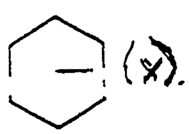 ; 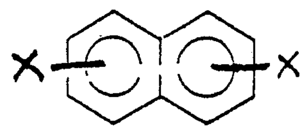 ; 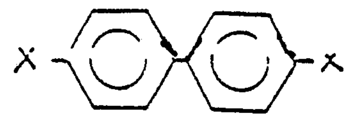 ;

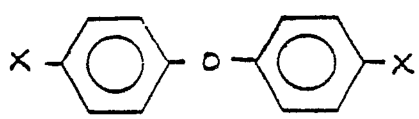 ; 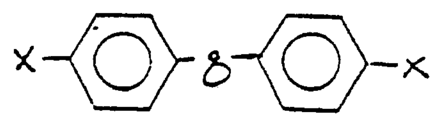 ;

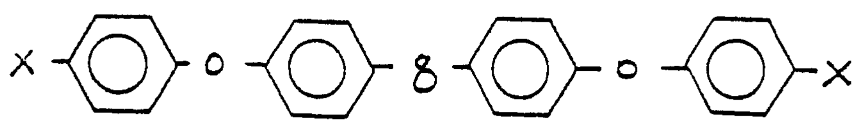 ;

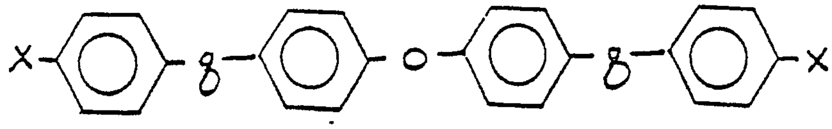 ; or

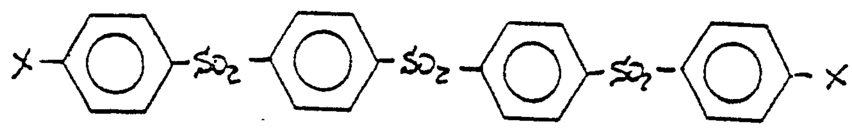

wherein X = halogen, preferably chlorine; and
q = -S-, $-SO_2-$, -CO-, $-(CH_3)_2C-$, and $-(CF_3)_2C-$; and
wherein the diol is selected from the group consisting of:

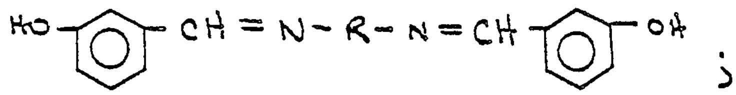

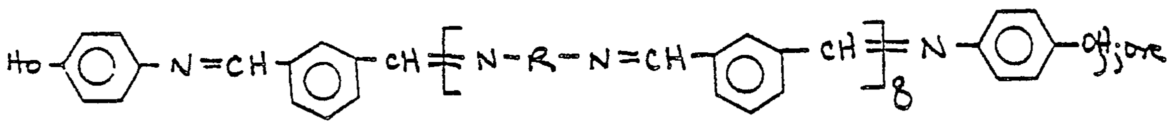

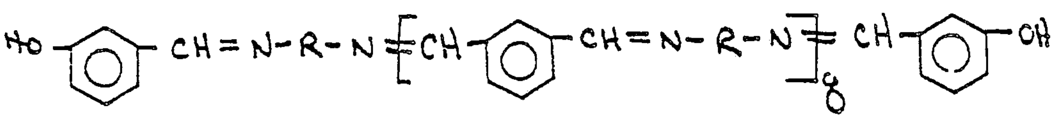

wherein R is selected from the group consisting of:
phenyl;
biphenyl;
naphthyl;l or
a compound of the general formula:

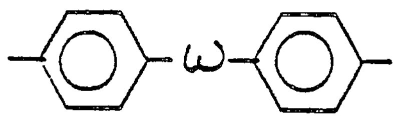

wherein W = $-CH_2-$ or $-SO_2-$; and
q = a small integer;
the reaction occurring under an inert atmosphere in the presence of excess base; and

(b) a suitable amount of a suitable dopant.

14. The product of claim 2 wherein the end cap imidophenol is selected from the group consisting of:

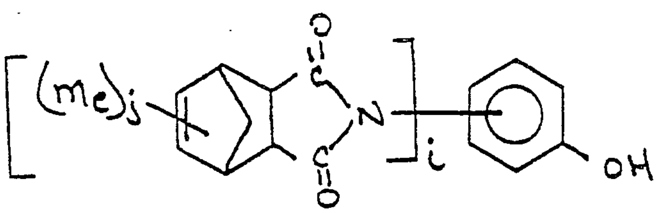

or

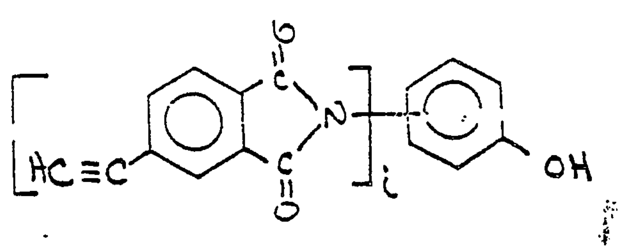

15. The prepreg of claim 12 wherein the end cap imidophenol is selected from the group consisting of:

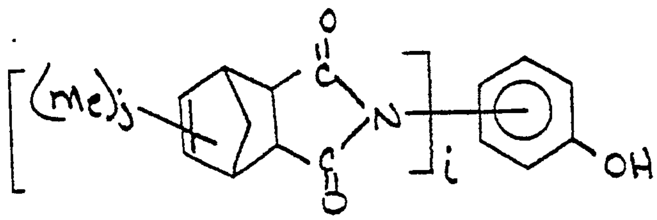

or

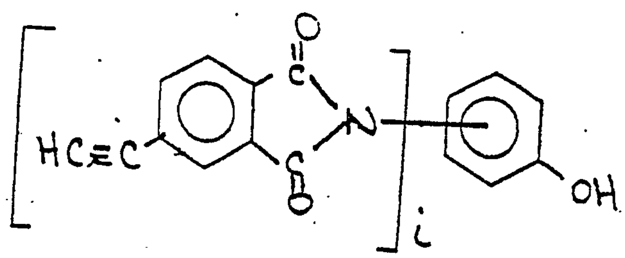

16. The oligomer of claim 13 wherein the end cap imidophenol is selected from the group consisting of:

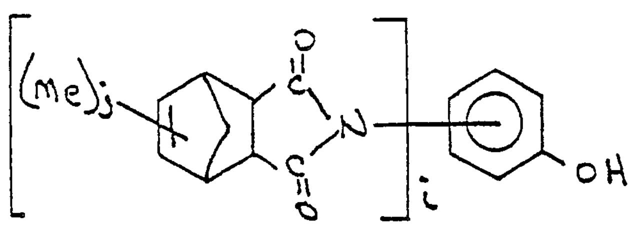

or

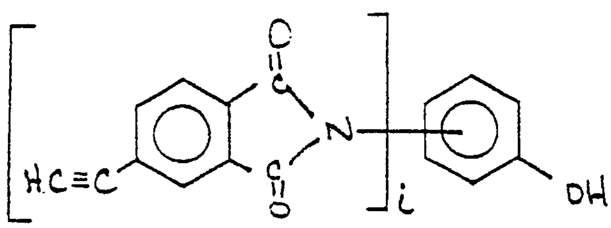

17. A prepreg formed with the product of claim 14.

18. The product of claim 2 wherein the dihalogen is selected from the group consisting of:

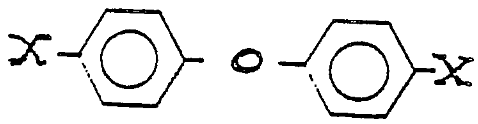

;

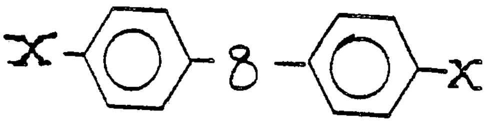

;

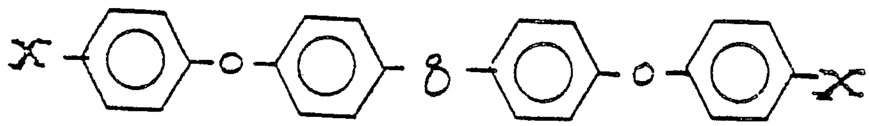

;

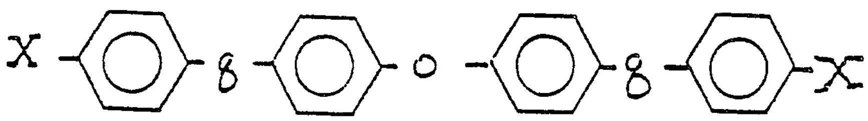

; or

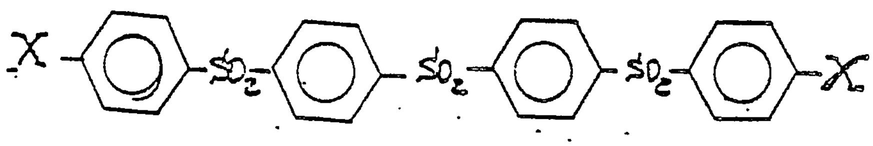

European Patent Office

# EUROPEAN SEARCH REPORT

Application Number

EP 88 10 0200

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 067 976 (THE BOEING CO.) * claims, examples * | 1-6,10, 12,14, 17,18 | C 08 G 65/40<br>C 08 G 65/48<br>C 08 J 5/24<br>C 07 D 207/44<br>C 08 G 73/12 |
| D,X | US-A-4 536 559 (H.R. LUBOWITZ et al.) * claims; examples; column 1, line 54 - column 2, line 10 * | 1-6,10, 12,14, 17,18 | |
| D,X | US-A-4 476 184 (H.R. LUBOWITZ et al.) * claims 1-15; example 5; column 1, line 54 - column 2, line 10 * | 1-6,10, 12,18 | |
| X | EP-A-0 148 543 (UNION CARBIDE CORP.) * claims 1-8; 27-29,37,38; page 21, lines 21-34 * | 2,5-8, 10-12, 14,15, 17,18 | |
| X | EP-A-0 187 348 (BASF AG) * claims; page 4, lines 5-25; page 10, line 38 - page 11, line 21 * | 7,8,10-12 | |
| X | DE-A-3 421 949 (UNION CARBIDE CORP.) * claims 1,7; page 18, lines 19-34; examples * | 2,5,6, 14,18 | **TECHNICAL FIELDS SEARCHED (Int. Cl.4)** |
| X | DE-A-2 246 026 (UNION CARBIDE CORP.) * claims * | 2,14,18 | C 08 G 65/00<br>C 08 J 5/00<br>C 07 D 207/00<br>C 08 G 73/00 |
| X | US-A-3 761 441 (W.J. D'ALESSANDRO et al.) * claims 1-11 * | 2,14,18 | |
| X | US-A-3 839 287 (G.T. KWIATKOWSKI et al.) * claims * | 2,14,18 | |

-/-

The present search report has been drawn up for all claims

| Place of search | Date of completion of the search | Examiner |
|---|---|---|
| BERLIN | 16-08-1988 | BOEKER R.B. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application Number

EP 88 10 0200

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 244 167 (AMOCO CORP.)<br>* claims; example A *<br>--- | 9 | |
| X | EP-A-0 243 833 (BASF AG)<br>* claims; examples *<br>--- | 9 | |
| X | US-A-4 654 410 (J. KASHIWAME et al.)<br>* claims; examples *<br>----- | 9 | |

TECHNICAL FIELDS SEARCHED (Int. Cl.4)

The present search report has been drawn up for all claims

| Place of search | Date of completion of the search | Examiner |
|---|---|---|
| BERLIN | 16-08-1988 | BOEKER R.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)